# EUROPÄISCHE PATENTSCHRIFT

(11) **EP 3 294 606 B1**
(45) Veröffentlichungstag und Bekanntmachung des Hinweises auf die Patenterteilung: **27.02.2019**
(21) Anmeldenummer: 16724590.1
(22) Anmeldetag: 10.05.2016
(51) Int. Cl.: B61H 7/08

(54) **MODULARE VORRICHTUNG ZUM KOPPELN EINES MAGNETSEGMENTES AN ZUMINDEST EINE ACHSE EINES SCHIENENFAHRZEUGES**
MODULAR DEVICE FOR COUPLING A MAGNETIC SEGMENT TO AT LEAST ONE AXLE OF A RAIL VEHICLE
DISPOSITIF MODULAIRE POUR LE COUPLAGE D'UN SEGMENT MAGNÉTIQUE À AU MOINS UN ESSIEU D'UN VÉHICULE FERROVIAIRE

(30) Priorität: 11.05.2015 DE 102015107346
(43) Veröffentlichungstag der Anmeldung: 21.03.2018
(73) Patentinhaber: KNORR-BREMSE Systeme für Schienenfahrzeuge GmbH, 80809 München (DE)
(72) Erfinder: JOERGL, Volker, 2384 Breitenfurt (AT); ELSTORPFF, Marc-Gregory, 80638 München (DE); RATHAMMER, Richard, 2262 Stillfried-Grub (AT); MAGYAR, Peter, 1030 Wien (AT); LEHMANN, Henry, 2371 Hinterbrühl (AT); HORVATH, Richard, 1060 Wien (AT); KRITZINGER, Thomas, 4873 Frankenburg am Hausruck (AT)
(86) Internationale Anmeldenummer: PCT/EP2016/000756
(87) Internationale Veröffentlichungsnummer: WO 2016/180528

(56) Entgegenhaltungen:
- EP-A1- 0 724 997
- EP-A2- 0 894 691
- WO-A1-2005/100121

## Beschreibung

Die vorliegende Erfindung bezieht sich auf eine modulare Vorrichtung zum Koppeln zumindest eines Magnetsegmentes einer Schienenbremse an zumindest eine Achse eines Schienenfahrzeuges. Insbesondere bezieht sich die vorliegende Erfindung auf einen Magnetsegmentträger für Wirbelstrombremsen.

### Hintergrund

Insbesondere bei Hochgeschwindigkeitszügen kommen Schienenbremsen wie beispielsweise Wirbelstrombremsen oder Magnetschienenbremsen zum Einsatz. Die Kraftwirkung wird hierbei direkt zwischen der Schiene und einem Rahmenteil (wie beispielsweise dem Drehgestellrahmen) und/oder einer Achse des Schienenfahrzeugs übertragen. Die bei einer Bremsung erzeugte elektromagnetische Kraft weist neben der longitudinal wirkendenden Bremskraft ebenfalls eine Vertikalkraft auf. Für diese Kraftkopplung wird ein Segmentträger und eine Tragarmkonsole genutzt, die bei konventionellen Systemen als ein Integralträger in Form eines monolithischen Stahlgussteils ausgeführt ist. Der Integralträger vereint die Funktionen der Bremskraft- und Vertikalkraft-übertragung zum Drehgestell, der Fixierung der Magnetsysteme und der Bereitstellung des magnetischen Rückschlusses.

Der Integralträger für konventionelle Magnetsegmentträger weist zwar aufgrund seiner Bauweise eine hohe Stabilität auf, ist aber nicht oder kaum anpassbar an die konkreten Besonderheiten der verschiedenen Schienenfahrzeuge. Daher muss der Integralträger für jedes Schienenfahrzeug separat hergestellt werden und kann nach der Herstellung nicht mehr geändert werden. Wenn sich das Schienenfahrzeug ändern sollte oder wenn im Unterbau weitere Komponenten untergebracht werden sollen, muss ein neuer Integralträger entwickelt werden. Da für jeden Fahrzeugtyp der Integralträger eine Sonderanfertigung darstellt, ist diese Vorgehensweise aufwendig und kostenintensiv.

In EP 0 724 997 A1 ist eine bekannte Kopplung eines Magnetsegmentes an eine Achse eines Schienenfahrzeuges offenbart.

Der vorliegenden Erfindung liegt die Aufgabe zugrunde, Alternativen für den konventionellen Stahlgussträger oder in geschweißter Ausführung bereitzustellen.

### Zusammenfassung der Erfindung

Die oben genannte Aufgabe wird durch eine Vorrichtung nach Anspruch 1 gelöst. Die abhängigen Ansprüche beziehen sich auf vorteilhafte Weiterbildungen des Erfindungsgegenstandes.

Die vorliegende Erfindung bezieht sich auf eine modulare Vorrichtung zum Koppeln eines Magnetsegmentes einer Schienenbremse an zumindest eine Achse eines Schienenfahrzeuges. Die modulare Vorrichtung umfasst die folgenden Merkmale: ein Trägermodul zum Tragen des Magnetsegmentes, zumindest ein Koppelmodul zum Koppeln an zumindest eine Achse des Schienenfahrzeuges und zumindest ein Verbindungsmodul zum Verbinden des Trägermoduls mit dem zumindest einen Koppelmodul. Das Trägermodul, das zumindest eine Koppelmodul und das zumindest eine Verbindungsmodul sind miteinander verbindbar, um eine Kopplung des Magnetsegmentes zu der zumindest einen Achse des Schienenfahrzeuges herzustellen, sodass eine vertikal wirkende Kraft beim Aktivieren der Schienenbremse von dem Trägermodul auf die Achse des Schienenfahrzeuges übertragbar ist. Anstatt an eine Achse kann das Koppelmodul auch an eine Hebeeinrichtung koppeln, um die Schienenbremse anzuheben (z.B. bei einer Deaktivierung). Insbesondere bei Magnetschienenbremsen, bei denen kein vorgegebener Luftspalt zwischen den Magnetsegmenten und der Schiene beim Bremsen erforderlich ist (sie bremsen durch einen direkten Kontakt zur Schiene), kann das zumindest eine Koppelmodul an eine Hebeeinrichtung koppeln, die zum vertikalen Anheben der Schienenbremse ausgebildet ist.

Somit wird die oben genannte Aufgabe durch den modularen Aufbau gelöst, der eine sehr flexible und skalierbare Konzeptlösung bereitgestellt. Die einzelnen Funktionen sind in separaten Untermodulen verwirklicht. Dabei dient das Trägermodul als ein Magnetsegmentträger und gleichzeitig als ein Schutzkasten für die Magnetspulen oder für die anderen magnetischen Komponenten, die zur Bremsung dienen. Das zumindest eine Koppelmodul dient als Vertikalkraftüberträger und kann optional eine Tragarmkonsole darstellen oder umfassen.

Das Schienenfahrzeug umfasst zumindest ein Rad zum Führen des Schienenfahrzeuges auf einer Schiene, wobei das zumindest eine Rad an der Achse befestigt ist. Das Schienenfahrzeug kann aber auch eine erste Achse mit zwei Rädern und eine zweite Achse mit zwei Rädern aufweisen, wobei zwischen der ersten Achse und der zweiten Achse die Schienenbremse ausgebildet ist.

Bei weiteren Ausführungsbeispielen weist das Trägermodul eine längliche Ausdehnung auf, die sich nach einem Anbringen an das Schienenfahrzeug parallel zur Schiene erstreckt. Das zumindest eine Koppelmodul kann optional ausgebildet sein, um an die Achse an zumindest einer der beiden Seiten des Rades zu koppeln. Das Koppelmodul kann aber auch an beiden Seiten des Rades an die entsprechende Achse koppeln. Mit anderen Worten, die Seite, an welcher das Koppelmodul an die Achse koppelt, ist frei wählbar und kann entsprechend den Bedürfnissen ausgewählt werden.

Im Allgemeinen wird der Magnetsegmentträger jedoch nicht nur an eine Achse befestigt, sondern kann bei weiteren Ausführungsbeispielen an mehreren Achsen koppeln. Daher kann das zumindest eine Verbindungsmodul ein erstes Verbindungsmodul und ein zweites Verbindungsmodul umfassen, die an gegenüberliegenden Seiten des Trägermoduls angeordnet sind. Ebenso kann das zumindest eine Koppelmodul ein erstes Koppelmodul zum Koppeln des ersten Verbindungsmoduls an die erste Achse und ein zweites Koppelmodul zum Koppeln des zweiten Verbindungsmoduls an die zweite Achse umfassen. Das erste und zweite Koppelmodul können optional eine gleiche oder eine unterschiedliche Länge aufweisen, um so eine symmetrische oder eine zu einer der beiden Achsen versetzten Halterung des Trägermoduls zu erlauben.

Hiermit wird es möglich, das Trägermodul derart zwischen der ersten und zweiten Achse anzuordnen, dass der vorhandene Bauraum optimal ausgenutzt wird. Optional kann hierdurch auch weiterer Platz für weitere Komponenten zwischen den entsprechenden Rädern und dem Trägermodul geschaffen werden. Außerdem braucht nicht notwendigerweise das Trägermodul mit den Magnetspulen in dem gesamten Zwischenraum zwischen den Achsen ausgebildet werden. Wenn beispielsweise ein sehr großer Abstand zwischen den Achsen vorliegt, kann die Schienenbremse optional nur auf einem Teil ausgebildet sein. Ebenso ist es möglich, dass auf der rechten Seite des Schienenfahrzeugs das Trägermodul an einer anderen Stelle entlang der Bewegungsrichtung ausgebildet ist als auf der linken Seite.

Bei weiteren Ausführungsbeispielen kann das zumindest eine Verbindungsmodul außerdem zumindest ein weiteres Verbindungsmodul und das zumindest eine Koppelmodul zumindest ein weiteres Koppelmodul aufweisen, sodass das Trägermodul mit der ersten Achse (oder mit der zweiten Achse) an zwei Stellen, zwischen denen eines der Räder angeordnet ist, koppelbar ist. Mit einer solchen beidseitigen Kopplung des Koppelmoduls an die Achse wird es möglich, dass ein auftretendes Drehmoment ebenfalls durch die Achse abgestützt werden kann bzw. dass bei einer entsprechend mittigen Anordnung kein Drehmoment auftritt. Dementsprechend kann das weitere Koppelmodul derart an die Achse koppeln, dass die auftretenden Drehmomente bei einem Bremsvorgang minimiert werden, was wiederum zu einer verringerten Materialermüdung führt.

Bei weiteren Ausführungsbeispielen kann das Trägermodul vertikal beweglich an dem Schienenfahrzeug angebracht sein und das zumindest eine Koppelmodul einen Tragarm umfassen. Der Tragarm kann an die Achse des Schienenfahrzeuges koppeln, um die vertikale Bewegung des Trägermoduls derart zu begrenzen, dass zwischen der Schiene und dem Magnetsegment ein vorbestimmter Luftspalt während eines Bremsvorganges der Schienenbremse aufrechterhalten wird. Bei weiteren Ausführungsbeispielen kann der Tragarm ebenfalls als ein integrales Bauteil des zumindest einen Koppelmoduls ausgebildet sein.

Bei weiteren Ausführungsbeispielen kann das zumindest eine Koppelmodul sich mit einem lateralen Versatz parallel zu dem Trägermodul erstrecken und das zumindest eine Verbindungsmodul ausgebildet sein, um eine Verbindung zwischen dem lateral zueinander versetzten Trägermodul und dem zumindest einen Koppelmoduls herzustellen. Daher kann das zumindest eine Verbindungsmodul als eine Kröpfung oder ein Winkelschraubverbinder dienen, um den lateralen Versatz zwischen dem Trägermodul (welches parallel oberhalb der Schiene verläuft) und dem Koppelmodul (welches an die Achse neben dem Rad koppelt) zu erreichen.

Bei weiteren Ausführungsbeispielen kann die Vorrichtung ein Spurhaltemodul aufweisen, das an dem Trägermodul befestigt und ausgebildet ist, um eine Drehmomentstütze zu bilden. Wie oben bereits erwähnt kann auf die Drehmomentstützen verzichtet werden oder sie können kleiner ausgebildet werden, wenn beispielsweise über mehrere Koppelmodule kein oder nur ein geringes Drehmoment während eines Bremsvorganges auftritt. Allerdings kann der vorhandene Bauraum zur Ausbildung weiterer Koppelmodule in einem gegebenen Schienenfahrzeug begrenzt sein, sodass es vorteilhaft sein kann, stattdessen ein Spurhaltemodul auszubilden, um die auftretenden Drehmomente abzufangen.

Bei weiteren Ausführungsbeispielen kann das Trägermodul eine oder mehrere Magnete einer Wirbelstrombremse oder einer Magnetschienenbremse aufweisen und das Trägermodul kann einen Schutzkasten für den einen oder die mehreren Magnete bilden. Die Anzahl der Magnete, die durch das Trägermodul gehalten und geschützt werden, ist weitestgehend frei wählbar bzw. kann an die Gegebenheiten entsprechend angepasst werden (z.B. um eine gewünschte Bremswirkung zu erreichen).

Bei weiteren Ausführungsbeispielen kann das Trägermodul einen Querschnitt senkrecht zu seiner Längserstreckung und/oder ein Material aufweisen, sodass während eines Bremsvorganges des Schienenfahrzeuges ein Durchbiegen des Trägermoduls unterdrückt wird, um einen homogenen Luftspalt zwischen dem zumindest einen Magnetsegment und der Schiene während des Bremsvorganges aufrechtzuhalten, ohne einen Ausgleich durch Ausgleichzylinder (z.B. durch separate Ring- oder Luftbälge) zu bedürfen.

Bei weiteren Ausführungsbeispielen kann das Trägermodul ein erstes Material aufweisen, das Koppelmodul ein zweites Material aufweisen, und das Verbindungsmodul ein drittes Material aufweisen, wobei das erste Material, das zweite Material und das dritte Material ausgewählt sind, um die Funktionen des Trägermoduls, des Koppelmoduls und des Verbindungsmoduls zu erfüllen.

Die vorliegende Erfindung bezieht sich ebenfalls auf ein System zum Halten von Magnetsegmenten einer Schienenbremse für ein Schienenfahrzeug, wobei das Schienenfahrzeug eine erste Achse mit zwei Rädern und eine zweite Achse mit zwei Rädern aufweist. Das System umfasst eine erste modulare Vorrichtung, wie sie zuvor beschrieben wurde, die zwischen der ersten Achse und der zweiten Achse oberhalb einer ersten Schiene an dem Schienenfahrzeug anbringbar ist. Außerdem umfasst das System eine zweite modulare Vorrichtung, wie sie zuvor beschrieben wurde, die zwischen der ersten Achse und der zweiten Achse oberhalb einer zweiten Schiene an dem Schienenfahrzeug anbringbar ist.

Optional kann das Trägermodul der ersten modularen Vorrichtung und das Trägermodul der zweiten modularen Vorrichtung in eine Bewegungsrichtung des Schienenfahrzeuges zueinander versetzt angeordnet sein oder unterschiedlich lang sein.

Die vorliegende Erfindung bezieht sich ebenfalls auf ein Schienenfahrzeug mit: einer Schienenbremse, insbesondere einer Wirbelstrombremse oder einer Magnetschienenbremse, mit Magnetsegmenten, und einem System zum Halten von Magnetsegmenten.

Bei weiteren Ausführungsbeispielen umfasst das Schienenfahrzeug vier Einzelräder als Losradsätze, die sich um jeweils eine Achse oder Achsabschnitte (Drehachse) drehen. Starre Achsen mit je zwei Rädern sind somit nicht notwendigerweise vorhanden.

Die genannten Ausführungsbeispiele bieten insbesondere den Vorteil, dass die Vorrichtung als ein Baukasten gefertigt werden kann und an konkrete Schienenfahrzeuge flexibel anpassbar ist. Beispielsweise können verschiedene Koppel- oder Verbindungsmodule mit einem gegebenen Trägermodul kombiniert werden bzw. die Lage des Trägermoduls zwischen den einzelnen Achsen kann variabel entsprechend den Wünschen gewählt werden. Somit treten die Nachteile der konventionellen Integralträger bei Ausführungsbeispielen der vorliegenden Erfindung nicht auf. Ein möglicher Mangel hinsichtlich der Festigkeit des modular aufgebauten Trägers gemäß der vorliegenden Erfindung, kann durch eine geeignete Materialwahl der einzelnen Komponenten kompensiert werden.

Außerdem kann durch eine geeignete Materialwahl das Gesamtgewicht des Trägermoduls verringert werden. Da mit zunehmend höheren Geschwindigkeiten von Schienenfahrzeugen Material- und somit Gewichtseinsparungen zunehmend an Bedeutung gewinnen, ist der konventionelle Stahlgussträger/Schweißkonstruktion im Vergleich zur vorliegenden Erfindung im Nachteil (bzw. dessen Einsparpotential ist begrenzt).

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine modulare Vorrichtung gemäß einem Ausführungsbeispiel der vorliegenden Erfindung.
- Fig. 2: zeigt weitere optionale Komponenten für die modulare Vorrichtung gemäß weiterer Ausführungsbeispiele.
- Fig. 3: zeigt eine Anbringung der modularen Vorrichtung an einem Schienenfahrzeug zwischen zwei Achsen.
- Fig. 4a-c: zeigen verschiedene Möglichkeiten einer symmetrischen und asymmetrischen Anordnung des Trägermoduls.
- Fig. 5a-b: zeigen verschiedene Möglichkeiten hinsichtlich der Anzahl von Magnetsegmenten, die in dem Trägermodul untergebracht sind.
- Fig. 6a-b: zeigen verschiedene Möglichkeiten der Anbringung des Koppelmoduls an den Achsen des Schienenfahrzeugs.
- Fig. 7: veranschaulicht die Kraftwirkung während einer Betätigung der Schienenbremse.

### Detaillierte Beschreibung

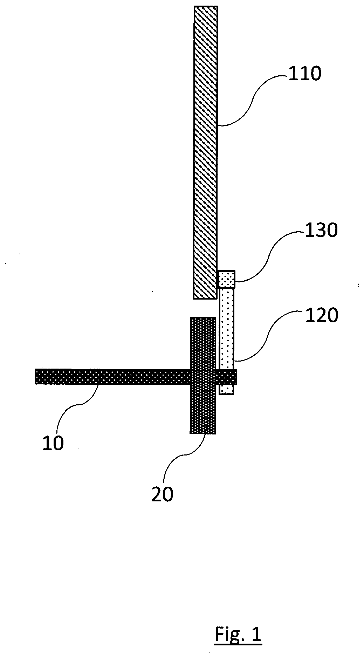

Fig. 1 zeigt eine modulare Vorrichtung zum Koppeln eines Magnetsegmentes einer Schienenbremse an eine Achse 10 eines Schienenfahrzeuges mit einem Rad 20. Die modulare Vorrichtung umfasst die folgenden Merkmale: ein Trägermodul 110 zum Tragen des Magnetsegmentes; ein Koppelmodul 120 zum Koppeln an zumindest eine Achse des Schienenfahrzeuges; und ein Verbindungsmodul 130 zum Verbinden des Trägermoduls 110 mit dem Koppelmodul 120. Das Trägermodul 110, das Koppelmodul 120 und das Verbindungsmodul 130 sind miteinander verbindbar, um eine Kopplung des Magnetsegmentes zu der Achse 10 des Schienenfahrzeuges herzustellen, sodass eine vertikal wirkende Kraft beim Aktivieren der Schienenbremse von dem Trägermodul 110 auf die Achse 10 und somit auf das Rad 20 des Schienenfahrzeugs übertragbar ist.

Das Trägermodul 110 ist derart an dem Schienenfahrzeug zu befestigen, dass es sich oberhalb der Schiene (nicht zu sehen) befindet. Da das Koppelmodul 120 an die Achse 10 koppelt, wird das Verbindungsmodul 130 genutzt, um eine Kröpfung zu erreichen und das Koppelmodul 120 seitlich (nicht in der lateralen Erstreckungsrichtung des Trägermoduls 110) an dem Trägermodul 110 befestigt ist.

Die modulare Vorrichtung wird an das Schienenfahrzeug derart befestigt, dass sie vertikal bewegbar ist. Dies kann beispielsweise über spezielle Vertikalbewegungskomponenten erreicht werden. Beim Aktivieren der Schienenbremse wird die modulare Vorrichtung und insbesondere das Trägermodul 110 vertikal abgesenkt, sodass die Magnetsegmente sich auf die Schiene zubewegen. Jedoch kommt es nicht zu einem Kontakt der Magnetsegmente mit den Schienen. Die Magnetsegmente werden vielmehr in einem vorbestimmten Abstand über der Schiene gehalten. Dieser vorbestimmte Abstand sollte groß genug gewählt werden, um einen unbeabsichtigten Kontakt der Magnetsegmente mit den Schienen zu vermeiden (was zu einer Zerstörung der Magnetsegmente führen könnte). Andererseits jedoch sollte der Abstand klein genug gewählt werden, um eine möglichst effiziente magnetische Kopplung zu den Schienen zu erreichen.

Durch dieses Absenken wird somit ein magnetischer Kontakt zu den Schienen hergestellt und beim Aktivieren werden die Magnetsegmente zur Schiene hin angezogen. Die durch die Schienenbremse verursachten Bremskräfte weisen somit eine Längskomponente, die das Schienenfahrzeug abbremst, und eine vertikale Komponente auf. Die Längskomponente wird über eine Bremskraftübertragungseinheit beispielsweise an einen Rahmen (z.B. den Drehgestellrahmen) des Schienenfahrzeugs direkt weitergeleitet. Die vertikalen Kraftkomponenten werden über das Koppelmodul 120 und über das Verbindungsmodul 130 an die Drehachse 10 des Rades 20 weitergeleitet.

Daher ist eine Kopplung zwischen dem Koppelmodul 120 und der Achse 10 des Schienenfahrzeugs nur bei der Aktivierung der Schienenbremse erforderlich, so dass keine direkte oder unmittelbare Kopplung zwischen dem Koppelmodul 120 und der Achse 10 während der normalen Fahrweise des Schienenfahrzeugs erforderlich ist (die normalen Rollreibungskräfte werden somit durch die modulare Vorrichtung nicht zusätzlich erhöht). Vielmehr kann die Kopplung des Kopplungsmoduls 120 mit der Achse 10 erst zu dem Zeitpunkt der Absenkung des Trägermoduls 110 bei einem Aktivieren der Schienenbremse erfolgen. Dies kann beispielsweise dadurch geschehen, dass das zumindest eine Koppelmodul 120 eine entsprechende Vertiefung aufweist, die mit der Achse 10 selbst oder mit einem Element, welches mit der Achse verbunden ist, eingreift, um so eine vertikale Kraft an die Achse 10 weiterzuleiten bzw. durch die Achse 10 abgestützt zu werden.

Damit die bei der Bremsung auftretenden Vertikalkräfte an die Achse 10 zuverlässig weitergeleitet werden können, ist das Verbindungsmodul 130 entsprechend stabil ausgebildet, d.h. es bietet eine belastbare Verbindung zwischen dem Koppelmodul 120 und dem Trägermodul 110 (z.B. eine Schrauben- oder Nietverbindung oder o.ä.).

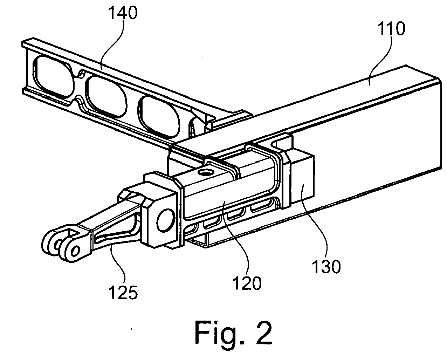

Fig. 2 zeigt ein Ausführungsbeispiel für die modulare Vorrichtung, bei der wiederum nur ein Verbindungsmodul 120 und nur ein Koppelmodul 130 und das Trägermodul 110 als Magnetsegmentträger ausgebildet sind. In dem gezeigten Ausführungsbeispiel ist das Koppelmodul 120 als eine Tragarmkonsole und das Verbindungsmodul 130 in Form einer Kröpfung ausgebildet und stellt die Verbindung zwischen dem Trägermodul 110 und dem Koppelmodul 120 her.

Da die Kopplung des Koppelmoduls 130 an die Achse 10 seitlich versetzt zu dem Trägermodul 110 erfolgen muss, führt dies dazu, dass bei einem Bremsvorgang die damit verbundenen Vertikalkräfte ein Drehmoment auf das Trägermodul 110 erzeugen (z. B. um die Fahrzeuglängsachse, d.h. die x-Achse, herum). Um jedoch eine Verdrehung des Trägermoduls 110 zu vermeiden, sind Drehmomentstützen erforderlich. Beispielsweise kann der gezeigte Spurhalter 140, der an dem Trägermodul 110 befestigt ist, eine solche Drehmomentstütze bieten. Damit wird sicher gestellt, dass das Trägermodul 110 bei einem Bremsvorgang sich weder um die x-Achse herum, noch um die y- oder z-Achse herum drehen kann.

Beispielsweise kann der Spurhalter 140 zu einem weiteren Trägermodul (in der Fig. 2 nicht zu sehen) geführt werden, welches zwischen gegenüberliegenden Rädern, die auf dem zweiten Schienenstrang laufen, vorgesehen ist. Wie weiter unten beschrieben wird, ist ein solcher Spurhalter 140 nicht notwendigerweise vorhanden.

Außerdem weist das Ausführungsbeispiel der Fig. 2 einen Tragarm 125 auf, der an dem Koppelmodul 120 angebracht ist oder ein Teil des Koppelmoduls 120 sein kann. Optional kann der Tragarm 125 integraler Bestandteil des Koppelmoduls 120 sein. Der Tragarm 125 ist ausgebildet, um eine Verbindung oder eine Kopplung zu der Achse 10 des Schienenfahrzeugs herzustellen. Der Tragarm 125 kann beispielsweise in einem Winkelbereich relativ zu dem Koppelmodul 120 drehbar gelagert sein (z.B. über eine Bolzenhalterung). Über die Einstellung des Winkelbereiches wird es möglich, einen vorbestimmten Wert für eine maximale Absenkung des Trägermoduls 110 festzulegen. Beim Erreichen der Maximalabsenkung erreicht der Tragarm einen Anschlag (z.B. mittels eines Teils der Bolzenverbindung), der eine weitere Absenkung verhindert. Damit wird erreicht, dass die Magnetsegmente in dem Trägermodul 110 einen vorbestimmten Abstand zur Schiene (nicht gezeigt in Fig. 2) einhalten. Der vorbestimmte Abstand ist dabei so gewählt, dass eine effiziente Bremsung mittels der Schienenbremse ermöglicht wird.

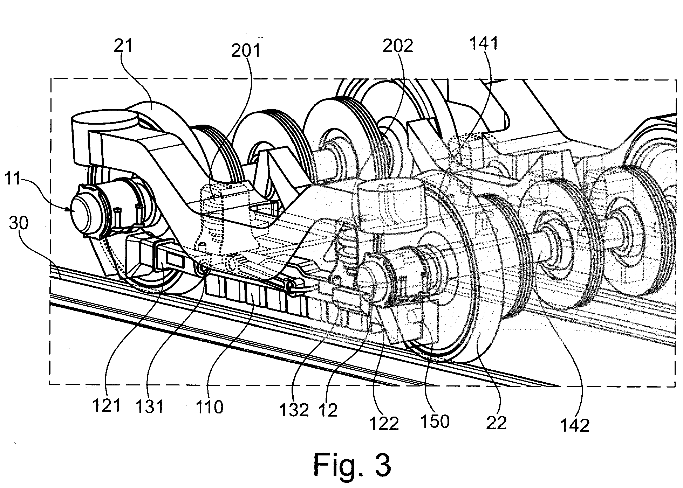

Fig. 3 zeigt weitere optionale Komponenten. In dem gezeigten Ausführungsbeispiel ist die modulare Vorrichtung zwischen einem ersten Rad 21 und einem zweiten Rad 22 ausgebildet. Das erste Rad 21 ist an einer ersten Achse 11 und das zweite Rad 22 ist an einer zweiten Achse 12 befestigt. Außerdem weist die modulare Vorrichtung zwei Koppelmodule 121, 122 und zwei Verbindungsmodule 131, 132 auf. Ein erstes Koppelmodul 121 und ein erstes Verbindungsmodul 131 stellen die Verbindung von dem Trägermodul 110 zu der ersten Achse 11 bereit. Das zweite Koppelmodul 122 und das zweite Verbindungsmodul 132 stellen eine Verbindung von dem Trägermodul 110 zu der zweiten Achse 12 bereit. Außerdem weist das Ausführungsbeispiel der Fig. 3 ein erstes Betätigungselement 201 und ein zweites Betätigungselement 202 auf, die ausgebildet sind, um das Trägermodul 110, beispielsweise bei einer Betätigung der Bremse, vertikal abzusenken, sodass Magnetsegmente in dem Trägermodul 110 sich auf die Schiene 30 zubewegen und in einem vorbestimmten Abstand über der Schiene 30 gehalten werden.

Weiter weist das Ausführungsbeispiel der Fig. 3 einen ersten Spurhalter 141 und einen zweiten Spurhalter 142 auf, die eine Verbindung zwischen dem Trägermodul 110 und einem gegenüberliegenden Trägermodul (nicht gezeigt in der Fig. 3) herstellen. Der erste und der zweite Spulhalter 141, 142 sind ausgebildet, um das Trägermodul 110 und das weitere Trägermodul bei einem Bremsvorgang positionsfest zu halten, sodass es insbesondere nicht zu einer Verdrehung des Trägermoduls 110 um eine beliebige Drehachse kommen kann. Damit wird erreichbar, dass alle Magnetsegmente entlang des Schienenstranges in dem vorbestimmten Abstand verbleiben, sodass eine effiziente Bremsung sichergestellt ist.

Weiter weist das Ausführungsbeispiel der Fig. 3 eine Nachstellvorrichtung 150 auf. Die Nachstellvorrichtung 150 ist ausgebildet, um einen Verschleiß (beispielsweise an den Rädern mit zunehmender Laufzeit) zu kompensieren. Wie bereits gesagt, ist es für eine zuverlässige Funktionsweise einer Wirbelstrombremse wichtig, dass ein vorbestimmter Abstand der Magnete von der Schiene eingehalten. Wenn beispielsweise die Räder sich im Laufe der Zeit abnutzen (d.h. dass sich deren Radius verringert), sollen die Magnetsegmente sich weniger tief absenken, um so den Spalt zwischen der Schiene 30 und den Magnetsegmenten auf dem vorbestimmten konstanten Wert zu halten. Diese Nachjustierung kann durch die Nachstellvorrichtung 150 vorgenommen werden, die so eingestellt werden kann, dass das Trägermodul 110 beim Absenken mittels der Betätigungselemente 201, 202 nur soweit abgesenkt wird, dass die Magnete nicht in direktem Kontakt zu der Schiene 30 gelangen, um so Schäden zu vermeiden. Für die Funktion einer Magnetschienenbremse kann der definierte Abstand auch Null sein.

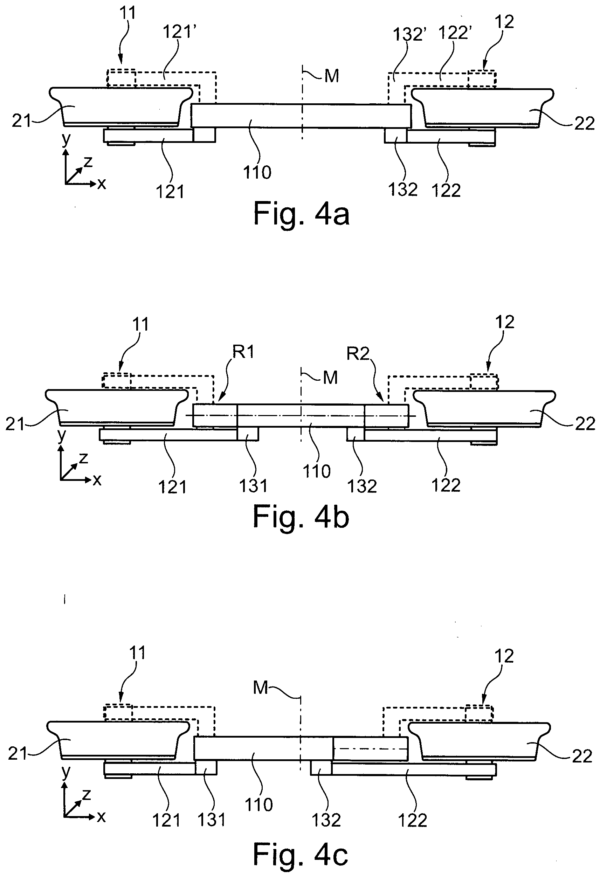

Fig. 4a-c zeigt Ausführungsbeispiele für mögliche Aufhängungen des Trägermoduls 110 zwischen einem ersten Rad 21 und einem zweiten Rad 22, die auf einer Schiene (nicht gezeigt) bewegt werden. Das erste Rad 21 ist auf einer ersten Achse 11 und das zweite Rad 22 ist auf einer zweiten Achse 12 befestigt. Eine Mittenlinie M zeigt die Mittenposition zwischen der ersten Achse 11 und der zweiten Achse 12 an.

Die drei Ausführungsbeispiele, wie sie in den Fig. 4 zu sehen sind, unterscheiden sich dadurch, dass das Trägermodul 110 entweder symmetrisch bezüglich der Mittenlinie M angeordnet ist (Ausführungsbeispiele aus den Fig. 4a und 4b) oder asymmetrisch zu der Mittenlinie M angeordnet sind (siehe Ausführungsbeispiel der Fig. 4c).

Bei dem Ausführungsbeispiel der Fig. 4a ist das Trägerelement 110 mittels eines ersten Koppelmoduls 121 an die erste Achse 11 koppelbar, wobei das erste Koppelmodul 121 über ein erstes Verbindungsmodul 131 an das Trägermodul 110 befestigt ist. Andererseits ist das Trägermodul 110 über ein zweites Verbindungsmodul 132 und ein zweites Koppelmodul 122 an die zweite Achse 12 koppelbar. Das erste und das zweite Verbindungsmodul 131, 132 sind an gegenüberliegenden Seiten bezüglich der Bewegungsrichtung des Schienenfahrzeugs an dem Trägermodul 110 angeordnet. Bei dem Ausführungsbeispiel der Fig. 4a erstreckt sich das Trägermodul 110 zwischen dem ersten Rad 21 und dem zweiten Rad 22 auf einer maximal möglichen Ausdehnung, und zwar symmetrisch in Bezug auf die Mittenlinie M.

Bei dem Ausführungsbeispiel der Fig. 4b erstreckt sich das Trägermodul 110 auf einem geringeren Abschnitt zwischen dem ersten Rad 21 und dem zweiten Rad 22. Daher ist bei dem Ausführungsbeispiel der Fig. 4b das erste Koppelmodul 121 und das zweite Koppelmodul 122 beispielsweise gleich lang ausgebildet, aber weisen eine größere Länge auf als das erste Koppelmodul 121 und das zweite Koppelmodul 122 aus der Fig. 4a. Bei dem Ausführungsbeispiel der Fig. 4b ist ein erster Zwischenraum R1 zwischen dem Trägermodul 110 und dem ersten Rad 11 und ein zweiter Zwischenraum R2 ist zwischen dem Trägermodul 110 und dem zweiten Rad 22 ausgebildet. Der erste und zweite Zwischenraum Rl, R2 können für andere Komponenten (nicht gezeigt) genutzt werden.

Bei dem Ausführungsbeispiel der Fig. 4c ist das Trägermodul 110 nicht mittig bezüglich der Mittenachse M angeordnet. Es ist stattdessen hin zu dem ersten Rad 21 verschoben. Alternativ ist es ebenfalls möglich, das Trägermodul 110 hin zu dem zweiten Rad 22 zu verschieben. Die Verschiebung kann auf gegenüberliegenden Radseiten gleich oder unterschiedlich vorgenommen werden, d.h. auf der rechten Seite des Schienenfahrzeuges kann das Trägermodul 110 zur ersten Achse 11 verschoben werden, währenddessen es auf der linken Seite hin zu der zweiten Achse 12 verschoben ist (oder umgekehrt). Dementsprechend ist bei dem Ausführungsbeispiel der Fig. 4c das erste Koppelmodul 121 kürzer ausgebildet als das zweite Koppelmodul 122. Bei weiteren Ausführungsbeispielen ist dies umgekehrt, d.h. das erste Koppelmodul 121 ist länger ausgebildet als das zweite Koppelmodul 122.

Bei den Ausführungsbeispielen wie sie in den Fig. 4 zu sehen sind, ist es optional ebenfalls möglich, dass weitere Verbindungsmodule 121', 122' und weitere Koppelmodule 131', 132' ausgebildet sind. Damit wird erreicht, dass eine doppelseitige Kopplung des Trägerelements 110 an die erste Achse 11 und/oder an die zweite Achse 12 möglich wird. Zum Beispiel können die weiteren Verbindungsmodule 121', 122' zwischen den gegenüberliegenden Rädern an die erste und/oder die zweite Achse 11, 12 koppeln.

Diese optionalen weiteren Kopplungselemente 121', 122' sind in der Fig. 4a bis 4c gestrichelt gezeichnet und können alternative oder als zusätzliche Kopplungen ausgebildet sein. Dementsprechend ist in der Fig. 4a optional ein weiteres erstes Koppelmodul 121' und ein weiteres erstes Verbindungsmodul 131' vorhanden, die eine Kopplung zwischen dem Trägermodul 110 und der ersten Achse 11 an einer Radaußen- und an einer Radinnenseite (der dem anderen Schienenstrang zugewandten Seite) bewirken. Optional kann in der gleichen Weise ein weiteres zweites Koppelmodul 122' und ein weiteres zweites Verbindungsmodul 132' ausgebildet sein, um eine Kopplung zwischen dem Trägermodul 110 und der zweiten Achse 12 bereitzustellen, wobei ebenfalls diese Kopplung an einem Achsenabschnitt erfolgt, der zwischen zwei gegenüberliegenden Rädern liegt.

Diese weiteren optionalen Kopplungen können ebenfalls in den Ausführungsbeispielen der Fig. 4b und 4c ausgebildet werden, was durch die gestrichelten Linien entsprechend dargestellt ist.

Eine beidseitige Kopplung einer Radachse (d.h. auf beiden Seiten des Rades) bietet den Vorteil, dass beim Bremsen kein oder ein deutlich kleineres Drehmoment auf das Trägermodul wirkt bzw. es direkt von der Achse aufgenommen werden kann. Damit werden die Spannungen in den Materialien verringert und der Spurhalter 140 ist nicht mehr erforderlich oder kann deutlich kleiner ausgebildet sein.

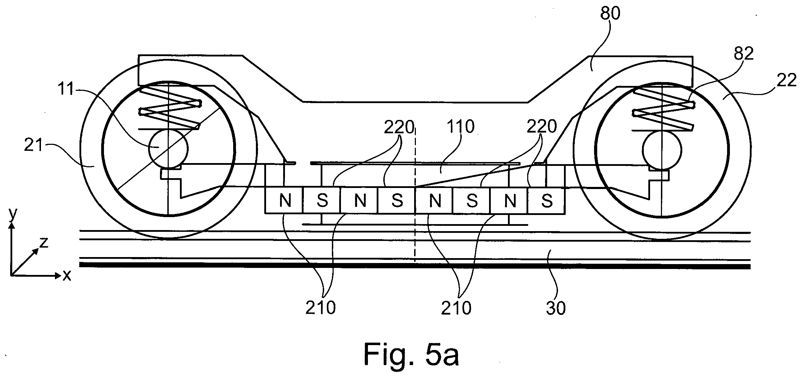

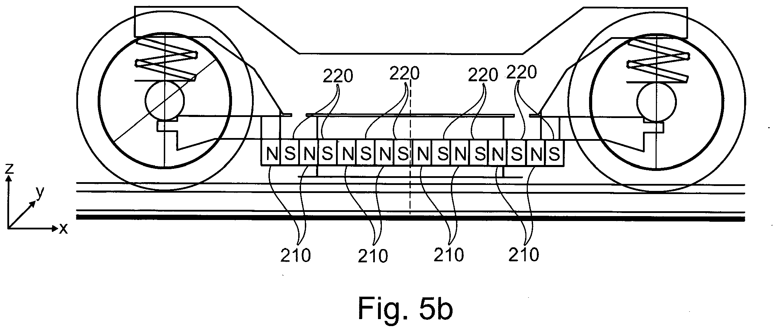

Fig. 5a, b zeigen zwei Möglichkeiten für vorhandene Magnetsegmente und weitere optionale Komponenten, wie die modulare Vorrichtung an einem Rahmen befestigt werden kann.

Bei dem Ausführungsbeispiel der Fig. 5a weist das Trägermodul insgesamt 8 Magnetpole auf, wovon vier erste Pol-Elemente 210 (z.B. N-Pol-Elemente) sich wechselseitig mit vier zweiten Pol-Elementen 220 (z.B. S-Pol-Elemente) abwechseln. Die Pol-Elemente sind entlang der Erstreckungsrichtung des Trägermoduls 110 alternierend angeordnet.

Bei dem Ausführungsbeispiel der Fig. 5b sind 16 Pol-Elemente 210, 220 alternierend entlang des Trägermoduls 110 angeordnet, und zwar acht Nordpol-Elemente und acht Südpol-Elemente. Die Anzahl der Pole oder Magnete kann beliebig gewählt werden.

Außerdem ist im Ausführungsbeispiel der Fig. 5 gezeigt, wie das Trägermodul 110 unterhalb eines Rahmens 80 (z.B. Drehgestellrahmen) angeordnet ist und der Rahmen 80 über eine gefederte Radaufhängung 82 mit der ersten Achse 11 und mit der zweiten Achse 12 des Schienenfahrzeuges verbunden ist. Das erste Rad 21 ist wiederum an der ersten Achse 11 und das zweite Rad 22 ist an der zweiten Achse 12 befestigt. Ebenso zu sehen ist, wie das erste Rad 21 und das zweite Rad 22 rollbar auf der Schiene 30 angeordnet sind.

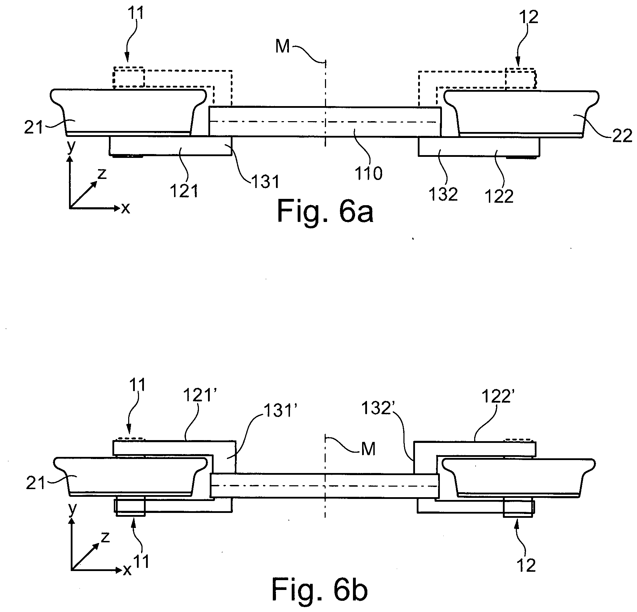

Die Fig. 6a, b zeigen, dass das erste Koppelmodul 121 auf einer Radaußenseite (außerhalb der beiden auf einer Achse gegenüberliegenden Räder) oder auf einer Radinnenseite (zwischen den beiden auf einer Achse gegenüberliegenden Rädern) angeordnet sein kann.

Die Fig. 6a zeigt dabei das Ausführungsbeispiel, wo das erste Koppelmodul 121 und das zweite Koppelmodul 122 an einer Radaußenseite an die erste Achse 11 und die zweite Achse 12 koppeln. Das Ausführungsbeispiel der Fig. 6b zeigt die Möglichkeit, dass das weitere erste Koppelmodul 121' an einer Radinnenseite der ersten Achse 11 und das weitere zweite Koppelmoduleinheit 122' an einer Radinnenseite der zweiten Achse 12 koppelt. In diesem Beispiel brauchen das erste und zweite Koppelmodul 121, 122 nicht ausgebildet sein.

Bei weiteren Ausführungsbeispielen ist es ebenfalls möglich, dass die Kopplung an die erste Achse 11 radaußerseitig erfolgt, während die Kopplung an die zweite Achse 12 radinnenseitig erfolgt (oder umgekehrt).

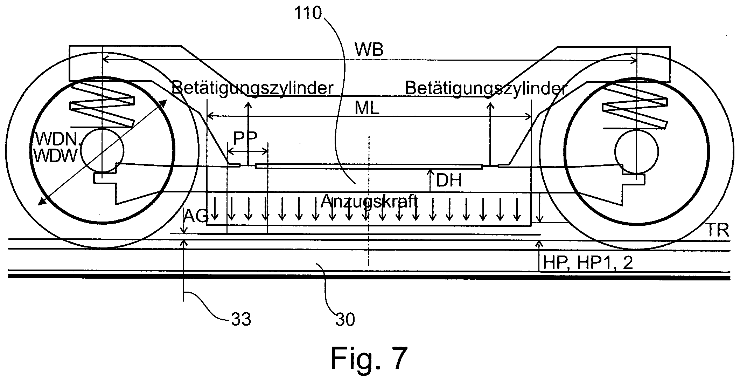

Die Fig. 7 veranschaulicht die Arbeitsweise der Magnetkraftwirkung, wobei die Vorrichtung analog ist zu dem Ausführungsbeispiel, wie es in der Fig. 5 zu sehen ist. Eine wiederholte Beschreibung ist daher hier nicht erforderlich.

Die Fig. 7 zeigt die Magnetbremse in einer Hochlage, die während des Bremsvorganges verlassen wird und das Trägermodul 110 sich auf die Schiene 30 zu bewegt, und zwar solange, bis ein vorbestimmter Luftspalt 33 zwischen dem unteren Abschnitt der Magnete und der Schiene 30 erreicht ist. Der vorbestimmte Luftspalt hat beispielsweise eine Ausdehnung in einem Bereich von 5 bis 9 mm oder in einem Bereich zwischen 5 und 15 mm.

Nach einem Aktivieren der Magnetbremse, wird eine Anziehungskraft durch die Magnete 210, 220 erzeugt, die beispielsweise dazu führen kann, dass das Trägermodul 110 so stark zur Schiene hingezogen wird, dass es zu einer Verbiegung des Trägermoduls 110 kommen kann. Daher kann es erforderlich sein, dass. Betätigungszylinder (die beispielsweise als Luftbälge ausgebildet sind) vorhanden sind, die eine Gegensteuerung in Abhängigkeit der ausgeübten Bremskraft vornehmen, so dass der Luftspalt 33 möglichst homogen zwischen dem Trägermodul und der Schiene 30 aufrechterhalten wird.

Da die bisherigen Bremsträger aus Gründen der Gewichtseinsparung und aufgrund ihres Stahlmaterials sich verbogen haben, waren Ringbälge ausgebildet, die pneumatisch eine Entlastung vorgenommen haben, um so den Luftspalt in einer gewünschten Weise einzustellen. Ausführungsbeispiele der vorliegenden Erfindung bieten nun den Vorteil, dass der Querschnitt des Trägermoduls 110 bzw. dessen Material derart gewählt werden kann, dass es zu keiner oder nur zu einer geringen Verbiegung des Trägermoduls kommt, so dass auf die Ringbälge verzichtet werden kann und trotzdem eine ausreichende Bremswirkung und ein gewünschter Luftspalt sich einstellt.

Wesentliche Aspekte der vorliegenden Erfindung können auch wie folgt zusammengefasst werden.

Durch eine funktionale Aufteilung des Integralträgers in drei Hauptbaugruppen kann eine funktionsangepasste Auswahl der Materialien und des Herstellungsverfahrens erfolgen. Die drei Hauptbaugruppen oder Untermodule umfassen: den Magnetsegmentträger (Trägermodul 110 als ein selbsttragender Segmentträger), den Winkelschraubverbinder (Verbindungsmodul 130) und den Vertikalkraftüberträger (Tragarmkonsole oder das Koppelmodul 120). Damit wird eine flexible und skalierbare Konzeptlösung bereitgestellt.

Weitere vorteilhafte Ausgestaltungen bezogen sich darauf, dass eine Tragarmkonsole 120 mit dem Tragarm 125 als ein integriertes Bauteil ausgeführt werden kann. Außerdem war es möglich, die Kröpfung (des Verbindungsmoduls 130) nach innen oder nach außen auszuführen, wobei die konkrete Ausführung der Kröpfung 130 in Abhängigkeit der Position der Radsatzlager erfolgen kann. Ferner ist es gemäß weiteren Ausführungsbeispielen möglich, den Magnetkastenträger (das Trägermodul 110) nur teilweise mit Magneten zu bestücken.

Somit berücksichtigen die Ausführungsbeispiele einen Haupttrend in der Entwicklung von neuen Hochgeschwindigkeitszügen, der in einer Reduktion der Achslast besteht. Dabei liefert die beispielhafte Wirbelstrombremse (ECB) einen zusätzlichen Massebeitrag und erhöht die Achslast des entsprechenden Drehfahrgestells (Bogie). Insbesondere ist es nicht möglich, die Masse von jeder einzelnen Wirbelstrombremse auf einen gesamten Zug aufzuteilen. Existierende Wirbelstrombremsen haben ein Gewicht-zu-Leistungsverhältnis (bei 200 km/h) von ungefähr 0,8 kg/kW. Wie Analysen gezeigt haben, sollten teilweise Massen von Wirbelstromkomponenten erreichbar sein, die ein Gewicht-zu-Leistungsverhältnis (bei 200 km/h) von weniger als 0,6 kg/kW ermöglichen.

Bei einer Neugestaltung des Wirbelstrombremsrahmens sollte beachtet werden, dass der Bauraum zur Installation gleich bleibt. Andere Komponenten werden dabei ohne Änderung übernommen (z.B. die Magnetspulen, die Bremskraftübertragungsverbindung, die Luftbälge und der Tragrahmen).

Ein weiterer Vorteil von Ausführungsbeispielen besteht darin, dass das neue Rahmenkonzept für unterschiedlichste Bogies mit unterschiedlichen Achsabständen und unterschiedlichen Freiräumen für die Bremseinrichtung anwendbar ist. Beispielsweise kann eine vollsymmetrische Anordnung von Magnetpolen oder eine teilweise symmetrische Anordnung von Magnetpolen genutzt werden.

Die Anzahl der Magnetspulen kann in Abhängigkeit des verfügbaren Raumes zwischen den Achsen gewählt werden. Ebenfalls ist es möglich, einen optimierten Polabstand der Magnete zu nutzen (da die Gesamtlänge des Trägermoduls variable einstellbar ist). Beispielhaft umfassen Aüsführungsbeispiel 8 oder 16 Pole oder Magnetspulen innerhalb eines Trägermoduls 110.

Es ist weiterhin möglich, den Wirbelstrombremsrahmen auf dem Fahrgestell (Bogie) mit einer außenseitigen Halterung und/oder mit einer innenseitigen Halterung zu installieren. Außerdem kann eine symmetrische oder eine asymmetrischen Anordnung frei gewählt werden. Bei Fahrgestellen mit außenseitiger Halterung wird der Tragarm 125 und die Tragarmkonsole 120 an einer Außenseite des Rades befestigt. Bei einer innenseitigen Halterung wird der Tragarm 125 und die Tragarmkonsole 120 an einer Innenseite des Rades befestigt.

### Bezugszeichenliste

- 10: Achse
- 20, 21, 22: Räder
- 30: Schiene
- 33: Luftspalt
- 80: Drehgestell
- 82: gefederte Radaufhängung
- 110: Trägermodul
- 120, 121, 122, ...: Koppelmodule
- 120', 121', 122': weitere Koppelmodule
- 125: Tragarm
- 130, 131, 132, ...: Verbindungsmodule
- 130', 131', 132': weitere Verbindungsmodule
- 140: Spurhalter
- 150: Nachstellvorrichtung
- 201, 202: Betätigungselemente
- 210: erste Magnetpole
- 220: zweite Magnetpole
- M: Mittellinie zwischen benachbarten Achsen

## Patentansprüche

1. Modulare Vorrichtung zum Koppeln eines Magnetsegmentes einer Schienenbremse an zumindest eine Achse eines Schienenfahrzeuges, mit folgenden Merkmalen:
ein Trägermodul (110) zum Tragen des Magnetsegmentes;
zumindest ein Koppelmodul (120) zum Koppeln an zumindest eine Achse des Schienenfahrzeuges oder an eine Hebeeinrichtung; und
zumindest ein Verbindungsmodul (130) zum Verbinden des Trägermoduls (110) mit dem zumindest einen Koppelmodul (120),
wobei das Trägermodul (110), das zumindest eine Koppelmodul (120) und das zumindest eine Verbindungsmodul (130) miteinander verbindbar sind, um eine Kopplung des Magnetsegmentes zu der zumindest einen Achse (10) des Schienenfahrzeuges herzustellen, sodass eine vertikal wirkende Kraft beim Aktivieren der Schienenbremse von dem Trägermodul (110) auf die Achse (10) übertragbar ist.

2. Modulare Vorrichtung nach Anspruch 1, wobei das Schienenfahrzeug zumindest ein Rad (20) zum Führen des Schienenfahrzeuges auf einer Schiene (30) aufweist und das zumindest eine Rad (20) an der Achse (10) befestigt ist,
und wobei das Trägermodul (110) eine längliche Ausdehnung aufweist, die sich nach einem Anbringen an dem Schienenfahrzeug parallel zur Schiene (10) erstreckt und das zumindest eine Koppelmodul (120) ausgebildet ist, um an die Achse (10) an zumindest einer der beiden Seiten des Rades (20) zu koppeln.

3. Modulare Vorrichtung nach Anspruch 1 oder Anspruch 2, wobei das Schienenfahrzeug eine erste Achse (11) mit zwei Rädern (21) und eine zweite Achse (12) mit zwei Rädern (22) aufweist, und zwischen der ersten Achse (11) und der zweiten Achse (12) die Schienenbremse ausgebildet ist, wobei das zumindest eine Verbindungsmodul (130) ein erstes Verbindungsmodul (131) und ein zweites Verbindungsmodul (132) aufweist, die an gegenüberliegenden Seiten des Trägermoduls (110) angeordnet sind, und das zumindest eine Koppelmodul (120) ein erstes Koppelmodul (121) zum Koppeln des ersten Verbindungsmoduls (131) an die erste Achse (11) und ein zweites Koppelmodul (122) zum Koppeln des zweiten Verbindungsmoduls (132) an die zweite Achse (12) aufweist, und wobei das erste und zweite Koppelmodul (121, 122) eine gleiche oder unterschiedliche Länge aufweisen, um eine symmetrische oder eine zu einer der beiden Achsen versetzten Halterung des Trägermoduls (110) zu erlauben.

4. Modulare Vorrichtung nach Anspruch 3, wobei
das zumindest eine Verbindungsmodul (130) außerdem zumindest ein weiteres Verbindungsmodul (130') und das zumindest eine Koppelmodul (120) zumindest ein weiteres Koppelmodul (120') aufweisen, sodass das Trägermodul (110) mit der ersten Achse (11) oder mit der zweiten Achse (12) an zwei Stellen, zwischen denen eines der Räder (20) angeordnet ist, koppelbar ist.

5. Modulare Vorrichtung nach einem der vorhergehenden Ansprüche, wobei das Trägermodul (110) vertikal beweglich an dem Schienenfahrzeug anbringbar ist und das zumindest eine Koppelmodul (120) einen Tragarm (125) umfasst,
wobei der Tragarm (125) ausgebildet ist, um an die Achse (10) des Schienenfahrzeuges zu koppeln und außerdem die vertikale Bewegung des Trägermoduls (110) derart zu begrenzen, dass zwischen der Schiene (30) und dem Magnetsegment ein vorbestimmter Luftspalt (33) während eines Bremsvorganges der Schienenbremse aufrechterhalten wird.

6. Modulare Vorrichtung nach Anspruch 5, wobei der Tragarm (125) ein integrales Bauteil des zumindest einen Koppelmoduls (120) ist.

7. Modulare Vorrichtung nach einem der vorhergehenden Ansprüche, wobei das zumindest eine Koppelmodul (120) sich mit einem lateralen Versatz parallel zu dem Trägermodul (110) erstreckt und das zumindest eine Verbindungsmodul (130) ausgebildet ist, um eine Verbindung zwischen dem lateral zueinander versetzten Trägermodul (110) und dem zumindest einen Koppelmoduls (120) herzustellen.

8. Modulare Vorrichtung nach einem der vorhergehenden Ansprüche, die weiter zumindest ein Spurhaltemodul (140) aufweist, das an dem Trägermodul (110) befestigt ist und ausgebildet ist, um eine Drehmomentstütze zu bilden.

9. Modulare Vorrichtung nach einem der vorhergehenden Ansprüche, wobei das Trägermodul (110) ein oder mehrere Magnete einer Wirbelstrombremse oder einer Magnetschienenbremse aufweist und das Trägermodul (110) einen Schutzkasten für das eine oder die mehreren Magnete bildet.

10. Modulare Vorrichtung nach einem der vorhergehenden Ansprüche, wobei das Trägermodul (110) einen Querschnitt senkrecht zu seiner Längserstreckung und/oder ein Material aufweist, sodass während eines Bremsvorganges des Schienenfahrzeuges ein Durchbiegen des Trägermoduls (110) unterdrückt wird, um einen homogenen Luftspalt (33) zwischen dem zumindest einen Magnetsegment und der Schiene (30) während des Bremsvorganges aufrechtzuhalten, ohne einen Ausgleich durch Ausgleichzylinder zu bedürfen.

11. Modulare Vorrichtung nach einem der vorhergehenden Ansprüche, wobei das Trägermodul (110) ein erstes Material aufweist, das Koppelmodul (120) ein zweites Material aufweist, und das Verbindungsmodul (130) ein drittes Material aufweist und das erste Material, das zweite Material und das dritte Material ausgewählt sind, um die Funktionen des Trägermoduls (110), des Koppelmoduls (120) und des Verbindungsmoduls (130) zu erfüllen.

12. Modulare Vorrichtung nach einem der vorhergehenden Ansprüche, wobei die Schienenbremse eine Magnetschienenbremse ist und die Hebeeinrichtung ausgebildet ist, um das Trägermodul (110) beim Deaktivieren der Magnetschienenbremse anzuheben.

13. System zum Halten von Magnetsegmenten einer Schienenbremse für ein Schienenfahrzeug, das eine erste Achse (11) mit zwei Rädern (31) und eine zweite Achse (12) mit zwei Rädern (32) aufweist, wobei das System Folgendes umfasst:
eine erste modulare Vorrichtung nach einem der Ansprüche 1 bis 12, die zwischen der ersten Achse (11) und der zweiten Achse (12) oberhalb einer ersten Schiene an dem Schienenfahrzeug anbringbar ist; und
eine zweite modulare Vorrichtung nach einem der Ansprüche 1 bis 12, die zwischen der ersten Achse (11) und der zweiten Achse (12) oberhalb einer zweiten Schiene an dem Schienenfahrzeug anbringbar ist.

14. System nach Anspruch 13, wobei das Trägermodul (110) der ersten modularen Vorrichtung und das Trägermodul (110) der zweiten modularen Vorrichtung in eine Bewegungsrichtung des Schienenfahrzeuges zueinander versetzt angeordnet sind oder unterschiedlich lang sind.

15. Schienenfahrzeug mit:
einer Schienenbremse, insbesondere einer Wirbelstrombremse oder einer Magnetschienenbremse, mit Magnetsegmenten; und
einem System nach Anspruch 13 oder Anspruch 14.

16. Schienenfahrzeug nach Anspruch 15, das weiter vier Einzelräder als Losradsätze umfasst.

## Claims

1. Modular device for coupling a magnetic segment of a rail brake to at least one axle of a rail vehicle, with the following features:
a support module (110) for supporting the magnetic segment;
at least one coupling module (120) for coupling to at least one axle of the rail vehicle or to a lifting device; and
at least one connecting module (130) for connecting the support module (110) to the at least one coupling module (120),
wherein the support module (110), the at least one coupling module (120) and the at least one connecting module (130) can be connected to one another in order to establish a coupling of the magnetic segment to the at least one axle (10) of the rail vehicle, so that a vertically acting force can be transmitted from the support module (110) to the axle (10) when the rail brake is activated.

2. Modular device according to claim 1, wherein the rail vehicle has at least one wheel (20) for guiding the rail vehicle on a rail (30), and the at least one wheel (20) is fastened to the axle (10),
and wherein the support module (110) has an elongated extent which extends parallel to the rail (10) after being attached to the rail vehicle, and the at least one coupling module (120) is designed to couple to the axle (10) on at least one of the two sides of the wheel (20).

3. Modular device according to claim 1 or 2, wherein the rail vehicle has a first axle (11) with two wheels (21) and a second axle (12) with two wheels (22), and the rail brake is formed between the first axle (11) and the second axle (12), wherein the at least one connecting module (130) has a first connecting module (131) and a second connecting module (132), which are arranged on opposite sides of the support module (110), and the at least one coupling module (120) has a first coupling module (121) for coupling the first connecting module (131) to the first axle (11) and a second coupling module (122) for coupling the second connecting module (132) to the second axle (12), and
wherein the first and second coupling modules (121, 122) have the same length or different lengths, in order to allow a symmetrical mounting of the support module (110) or a mounting of the support module (110) that is offset with respect to one of the two axles.

4. Modular device according to claim 3, wherein the at least one connecting module (130) has in addition a further connecting module (130'), and the at least one coupling module (120) has at least one further coupling module (120'), so that the support module (110) can be coupled to the first axle (11) or to the second axle (12) at two points between which one of the wheels (20) is located.

5. Modular device according to any of the preceding claims, wherein the support module (110) can be attached to the rail vehicle in vertically mobile manner and the at least one coupling module (120) includes a supporting arm (125),
wherein the supporting arm (125) is designed to couple to the axle (10) of the rail vehicle and, in addition, to limit the vertical movement of the support module (110) in such away that a predetermined air gap (33) is maintained between the rail (30) and the magnetic segment during a braking operation of the rail brake.

6. Modular device according to claim 5, wherein the supporting arm (125) is an integral component of the at least one coupling module (120).

7. Modular device according to any of the preceding claims, wherein the at least one coupling module (120) extends parallel to the support module (110) with a lateral offset, and the at least one connecting module (130) is designed to establish a connection between the support module (110) laterally offset with respect to one another and the at least one coupling module (120).

8. Modular device according to any of the preceding claims, which further has at least one tracking module (140), which is fastened to the support module (110) and designed to form a torque reaction bar.

9. Modular device according to any of the preceding claims, wherein the support module (110) has one or more magnets of an eddy-current brake or of a magnetic rail brake, and the support module (110) forms a protective case for the one or more magnets.

10. Modular device according to any of the preceding claims, wherein the support module (110) has such a cross-section perpendicular to its longitudinal extent and/or such a material that a flexing of the support module (110) is suppressed during a braking operation of the rail vehicle, in order to obtain a homogeneous air gap (33) between the at least one magnetic segment and the rail (30) during the braking operation, without needing a compensation by compensating cylinders.

11. Modular device according to any of the preceding claims, wherein the support module (110) has a first material, the coupling module (120) has a second material, and the connecting module (130) has a third material, and the first material, the second material and the third material have been selected in order to fulfil the functions of the support module (110), of the coupling module (120) and of the connecting module (130).

12. Modular device according to any of the preceding claims, wherein the rail brake is a magnetic rail brake and the lifting device is designed to raise the support module (110) when the magnetic rail brake is being deactivated.

13. System for holding magnetic segments of a rail brake for a rail vehicle which has a first axle (11) with two wheels (31) and a second axle (12) with two wheels (32), said system comprising the following:
a first modular device according to any of claims 1 to 12, which can be attached to the rail vehicle between the first axle (11) and the second axle (12) above a first rail; and
a second modular device according to any of claims 1 to 12, which can be attached to the rail vehicle between the first axle (11) and the second axle (12) above a second rail.

14. System according to claim 13, wherein the support module (110) of the first modular device and the support module (110) of the second modular device are arranged offset with respect to one another in a direction of motion of the rail vehicle or are of different lengths.

15. Rail vehicle with:
a rail brake, in particular an eddy-current brake or a magnetic rail brake, with magnet segments; and
a system according to claim 13 or claim 14.

16. Rail vehicle according to claim 15, which further comprises four individual wheels as loose wheel sets.

## Revendications

1. Dispositif modulaire pour le couplage d'un segment magnétique d'un frein sur rail à au moins un essieu d'un véhicule ferroviaire, ayant les caractéristiques suivantes :
un module (110) de support pour supporter le segment magnétique;
au moins un module (120) de couplage pour le couplage à au moins un essieu du véhicule ferroviaire ou à un dispositif de levage et
au moins un module (130) de liaison pour la liaison du module (110) de support au au moins un module de couplage,
dans lequel le module (110) de support, le au moins un module (120) de couplage et le au moins un module (130) de liaison peuvent être reliés les uns aux autres, afin de produire un couplage du segment magnétique au au moins un essieu (10) du véhicule ferroviaire, de manière à pouvoir,
lorsque le frein sur rail est activé, transmettre une force agissant verticalement du module (110) de support à l'essieu (10).

2. Dispositif modulaire suivant la revendication 1, dans lequel le véhicule ferroviaire a au moins une roue (20) pour guider le véhicule ferroviaire sur un rail (30) et la au moins une roue (20) est fixée à l'essieu (10),
et dans lequel le module (110) de support a une étendue longitudinale, qui s'étend, après une mise sur le véhicule ferroviaire, parallèlement au rail et le au moins un module (120) de couplage est constitué pour se coupler à l'essieu (10) à au moins l'un des deux côtés de la roue (20).

3. Dispositif modulaire suivant la revendication 1 ou la revendication 2, dans lequel le véhicule ferroviaire a un premier essieu (11) ayant deux roues (21) et un deuxième essieu (12) ayant deux roues (22), et le frein sur rail est constitué entre le premier essieu (11) et le deuxième essieu (12), le au moins un module (130) de liaison ayant un premier module (131) de liaison et un deuxième module (132) de liaison, qui sont disposés sur des côtés opposés du module (110) de support, et le au moins un module (120) de couplage a un premier module (131) de couplage pour le couplage du premier module (131) de liaison au premier essieu (11) et un deuxième module (122) de couplage pour le couplage du deuxième module (132) de liaison au deuxième essieu (12) et
dans lequel le premier et le deuxième modules (121, 122) de couplage ont une même longueur ou une longueur différente, afin de permettre une fixation symétrique ou une fixation décalée, par rapport à l'un des deux essieux, du module (110) de support.

4. Dispositif modulaire suivant la revendication 3, dans lequel
le au moins un module (130) de liaison a, en outre, un autre module (130') de liaison et le au moins un module (120) de couplage a, en outre, au moins un autre module (120') de couplage, de manière à pouvoir coupler le module (110) de support au premier essieu (11) ou au deuxième essieu (12), en deux points entre lesquels est montée l'une des roues (20).

5. Dispositif modulaire suivant l'une des revendications précédentes, dans lequel le module (110) de support peut être monté en étant mobile verticalement sur le véhicule ferroviaire et le au moins un module (120) de couplage comprend un bras (125) porteur,
dans lequel le bras (125) porteur est constitué pour se coupler à l'essieu (10) du véhicule ferroviaire et limiter, en outre, le déplacement vertical du module (110) de support, de manière à maintenir, entre le rail (30) et le segment magnétique, un entrefer (30) déterminé à l'avance pendant une opération de freinage du véhicule ferroviaire.

6. Dispositif modulaire suivant la revendication 5, dans lequel le bras (125) porteur fait partie intégrante du au moins un module (120) de couplage.

7. Dispositif modulaire suivant l'une des revendications précédentes, dans lequel le au moins un module (120) de couplage s'étend, par une partie décalée latéralement, parallèlement au module (110) de support et le au moins un module (130) de liaison est constitué pour produire une liaison entre le module (110) de support décalé latéralement et le au moins un module (120) de couplage.

8. Dispositif modulaire suivant l'une des revendications précédentes, qui a, en outre, au moins un module (140) de maintien sur voie, qui est fixé au module (110) de support et qui est constitué pour former une assistance de couple.

9. Dispositif modulaire suivant l'une des revendications précédentes, dans lequel le module (110) de support a un ou plusieurs aimants d'un frein à courant de Foucault ou d'un frein sur rail électromagnétique et le module (110) de support forme un caisson de protection du un ou des plusieurs aimants.

10. Dispositif modulaire suivant l'une des revendications précédentes, dans lequel le module (110) de support a une section transversale perpendiculaire à son étendue longitudinale et/ou un matériau, de manière à supprimer, pendant une opération de freinage du véhicule ferroviaire, une flexion du module (110) de support, afin de maintenir un entrefer (33) homogène entre le au moins un segment magnétique et le rail (30) pendant l'opération de freinage, sans avoir besoin d'une compensation par cylindre de compensation.

11. Dispositif modulaire suivant l'une des revendications précédentes, dans lequel le module (110) de support a un premier matériau, le module (120) de couplage a un deuxième matériau et le module (130) de liaison a un troisième matériau et le premier matériau, le deuxième matériau et le troisième matériau sont choisis pour remplir les fonctions du module (110) de support? du module (120) de couplage et du module (130) de liaison.

12. Dispositif modulaire suivant l'une des revendications précédentes, dans lequel le frein sur rail est un frein sur rail électromagnétique et le dispositif de levage est constitué pour lever le module (110) de support, lorsque le frein sur rail électromagnétique est désactivé.

13. Système de maintien de segment magnétique d'un frein sur rail pour un véhicule ferroviaire, qui a un premier essieu (11) ayant deux roues (31) et un deuxième essieu (12) ayant deux roues (32), le système comprenant ce qui suit :
un premier dispositif modulaire suivant l'une des revendications 1 à 12, qui peut être monté sur le véhicule ferroviaire entre le premier essieu (11) et le deuxième essieu (12), au-dessus d'un premier rail et
un deuxième dispositif modulaire suivant l'une des revendications 1 à 12, qui peut être monté sur le véhicule ferroviaire entre le premier essieu (11) et le deuxième essieu (12), au-dessus d'un deuxième rail.

14. Système suivant la revendication 13, dans lequel le module (110) de support du premier dispositif modulaire et le module (110) de support du deuxième dispositif modulaire sont disposés de manière décalée l'un par rapport à l'autre dans le sens de déplacement du véhicule ferroviaire ou sont de longueur différente.

15. Véhicule ferroviaire, comprenant :
un frein sur rail, notamment un frein à courant de Foucault ou un frein sur rail électromagnétique ayant des segments magnétiques et
un système suivant la revendication 13 ou la revendication 14.

16. Véhicule ferroviaire suivant la revendication 15, qui comprend, en outre, quatre roues individuelles sous forme d'essieux fous.
